# EUROPÄISCHE PATENTSCHRIFT

(11) **EP 1 278 630 B1**
(45) Veröffentlichungstag und Bekanntmachung des Hinweises auf die Patenterteilung: **26.11.2003**
(21) Anmeldenummer: 01925185.9
(22) Anmeldetag: 26.04.2001
(51) Int. Cl.: B32B 7/06, B65D 77/20

(54) **HEISSSIEGELBARE MEHRSCHICHTFOLIE FÜR WIEDERVERSCHLIESSBARE PACKUNGEN**
THERMALLY-SEALABLE MULTILAYER FILM FOR RESEALABLE PACKAGES
FILM MULTICOUCHE THERMOSCELLABLE POUR EMBALLAGES REFERMABLES

(30) Priorität: 04.05.2000 AT 7802000
(43) Veröffentlichungstag der Anmeldung: 29.01.2003
(73) Patentinhaber: TEICH Aktiengesellschaft, 3200 Weinburg (AT)
(72) Erfinder: ZUSER, Wilhelm, A-3202 Hofstetten (AT); GERSTL, Klaus, A-3202 Hofstetten (AT); SCHEDL, Adolf, A-3200 Obergrafendorf (AT); HUBER, Rainer, A-3100 St. Pölten (AT); NEKULA, Lambert, A-3202 Hofstetten (AT); REITERER, Franz, . (AT)
(74) Vertreter: DUNGLER, Karin c/o BEER & PATENTANWÄLTE KEG
(86) Internationale Anmeldenummer: AT0100126
(87) Internationale Veröffentlichungsnummer: WO01083208

(56) Entgegenhaltungen:
- WO-A-98/26931
- US-A- 3 335 939
- US-A- 6 056 141

## Beschreibung

### Technisches Gebiet

Die Erfindung betrifft eine heißsiegelbare Mehrschichtfolie für nach dem Öffnen wiederverschließbare Packungen, bestehend aus einer Außenschicht und einer Trägerschicht, welche an ihrer dem Packungsgut zugewandten Seite eine heißsiegelbare Schicht aufweist. Die Erfindung betrifft ferner die Verwendung derartiger heißsiegelbarer Mehrschichtfolien zum Verschließen von Lebensmittelbehältern, wie Joghurtbechern.

### Stand der Technik

Heißsiegelbare Mehrschichtfolien werden beispielsweise zum Verschließen von Lebensmittelbehältern eingesetzt. So werden beispielsweise Behälter für Joghurt mit speziell durch Stanzen geformten Deckelelementen verschlossen. Nach dem Stanzen werden die Deckelelemente in einen Stapel gelagert. Da die Deckelelemente beidseitig glatte Oberflächen aufweisen, kommt es beim Entstapeln der Deckelelemente zu Problemen, da diese so stark aneinander haften, dass teilweise zwei oder mehrere Deckelelemente gleichzeitig entstapelt werden.

Um diesen Nachteil zu vermeiden, wird gemäß der WO-A1-98/26931 vorgeschlagen, zumindest eine Seite des Deckelelementes oberflächenrauh auszugestalten, wobei sich eine Rauhtiefe für den Entstapelungsvorgang von 1 bis 100 µm als vorteilhaft erwies.

Weiters weisen Deckelelemente ganz allgemein den Nachteil auf, dass die damit verschlossenen Packungen nach dem Öffnen entweder überhaupt nicht wieder verschließbar sind und wenn, dann nicht durch einfaches Zusammenfügen von Hand.

Die Wiederverschließbarkeit von Lebensmittelbehältern wird jedoch ein immer häufiger werdendes Bedürfnis seitens der Konsumenten. Dies deshalb, da die Behälter immer größer werden, so dass der Konsument gezwungen ist, deren Inhalt portionsweise zu entnehmen. Will man vermeiden, dass bei nicht wiederverschließbaren Packungen Aromastoffe verloren gehen oder der Behälterinhalt verschmutzt wird, so müßte eine gesonderte Abdeckung, z.B. in Form eines zusätzlichen Kunststoff-Stülpdeckels, vorgesehen sein. Dies ist jedoch einerseits umständlich, und anderseits weisen derartige Stülpdeckel nicht die notwendige zuverlässige Abdichtung auf. Da diese Stülpdeckel in den meisten Fällen unterschiedliche Materialzusammensetzungen im Gegensatz zu den heißsiegelbaren Mehrschichtfolien aufweisen, führt dies ferner zu Entsorgungsproblemen.

Gemäß der US-A-3 335 939 sowie der US-A-6 056 141 werden mehrschichtige Deckelelemente vorgeschlagen, die in zumindest einer Schicht eine Schwächungslinie aufweisen, welche das partielle Einreißen der Deckelelemente ermöglichen. Zum Wiederverschließen sind die Deckelelemente mit einer drucksensitiven Zwischenschicht versehen. Durch diese Deckelelemente ist es zwar möglich, eine bereits geöffnete Packung wiederzuverschließen, jedoch weisen diese auf Grund der beidseitig glatten Oberflächenstruktur weiterhin die vorgenannten Probleme beim Entstapeln nach Lagerung in einem Stapel aufgrund des Aneinanderhaftens der Deckelelemente auf.

Der Erfindung liegt somit die Aufgabe zu Grunde, heißsiegelbare Mehrschichtfolien der eingangs genannten Art zum Verschließen von Lebensmittelbehältern bereitzustellen, welche einerseits nach erstmaligem Öffnen mehrmals wieder von Hand verschlossen und welche anderseits nach deren Herstellung in einfacher Weise in Stapeln gelagert werden können.

### Darstellung der Erfindung

Diese Aufgabe wird mittels einer heißsiegelbaren Mehrschichtfolie der eingangs genannten Art erfindungsgemäß dadurch gelöst, dass zwischen Trägerschicht und Außenschicht eine Selbstklebeschicht aus drucksensitivem Klebstoff vorliegt und dass die Trägerschicht Schwächungslinien, welche eine Öffnung zur Entnahme des Packungsgutes definieren, sowie an ihrer dem Behälterinnenraum zugewandten Seite eine oberflächenrauhe Beschichtung mit einer Rauhtiefe von 1 bis 100µm aufweist.

Vorteilhafte und bevorzugte Ausgestaltungen der erfindungsgemäßen Mehrschichtfolie sind Gegenstand der Unteransprüche 2 bis 15.

Die Erfindung betrifft ferner die Verwendung der vorgenannten erfindungsgemäßen heißsiegelbaren Mehrschichtfolie zum Verschließen von Lebensmittelbehältern, wie Joghurtbechern, welche mittels einer Öffnungebilfe, vorzugsweise einer Grifflasche, derart geöffnet werden, dass beim Öffnen innerhalb der Trägerschicht durch Maßgabe der Schwächungslinien eine Öffnung zur Entnahme des Packungsgutes gebildet wird, welche mittels der drucksensitiven Kleberschicht wiederverschlossen werden kann.

### Wege zur Ausführung der Erfindung

Die Erfindung wird nunmehr anhand von Figuren 1 bis 6 sowie anhand von Ausführungsbeispielen näher erläutert.

Figur 1 zeigt die erfindungsgemäße Verwendung einer heißsiegelbaren Mehrschichtfolie 1 zum Verschließen eines Behälters 3 im geschlossenen Zustand.

Figur 2 zeigt mögliche Ausführungsformen einer erfindungsgemäßen heißsiegelbaren Mehrschichtfolie 1, wobei Fig. 2a den Bereich der Schwächungslinien in Form von Einkerbungen im Schnitt zeigt.

Figur 3 zeigt eine erfindungsgemäße heißsiegelbare Mehrschichtfolie 1 nach teilweisem Öffnen des Behälters 3.

Figur 4 zeigt eine heißsiegelbare Mehrschichtfolie 1 mit Sehwächungslinien in Form einer Anstanzung.

Figur 5 zeigt die Verwendung einer erfindungsgemäßen heißsiegelbaren Mehrschichtfolie 1 zum Verschließen von Behältern 3, wobei im teilweise geöffneten Zustand eine etwa V-formige Öffnung zur Entnahme des Packungsgutes dargestellt ist.

Figur 6 zeigt die Verwendung einer erfindungsgemäßen heißsiegelbaren Mehrschichtfolie 1 gemäß Fig. 5 an einem Behälter 3 mit schnabelförmiger Ausgießvorrichtung.

Die erfindungsgemäße heißsiegelbare Mehrschichtfolie kann hinsichtlich der Trägerschicht aus einer Kunststoff-Folie oder einem Kunststoff-Folien-Verbund hergestellt werden. Die Kunststoffe werden dabei aus der Gruppe Polypropylen, Polyethylen, Polyamid und Polyethylenterephthalat ausgewählt. Die Schichtdicke der Kunststoff-Folie liegt beispielweise in einem Bereich von etwa 30 bis 250 µm. Bei Verwendung eines Folienverbundes liegt die Schichtdicke in einem Bereich von etwa 50 bis 250 µm. Der Folienverbund wird beispielsweise durch Coextrusion hergestellt, so dass ein aus zwei oder mehreren Schichten bestehender Verbund entsteht.

Die erfindungsgemäße heißsiegelbare Mehrschichtfolie kann hinsichtlich der Trägerschicht auch aus einer Aluminiumfolie mit einer Zugfestigkeit von beispielsweise 50 bis 200 N/mm² hergestellt werden. Die Dicke der Aluminiumfolie liegt beispielsweise in einem Bereich von 10 bis 50 µm, vorzugsweise 20 bis 40 µm.

Die erfindungsgemäße Mehrschichtfolie ist an ihrer Trägerschicht, nämlich an der dem Packungsgut zugewandten Oberflächenseite, mit einer oberflächenrauhen Beschichtung mit einer Rauhtiefe von 1 bis 100 µm versehen. Die Oberflächenrauhigkeit kann beispielsweise durch Zugabe von körnigen Füllstoffen erzeugt werden, wobei eine Rauhigkeit von mindestens 1 µm erzeugt wird. Weiters ist es möglich, die oberflächenrauhe Beschichtung in Form eines Druckbildes, welches nach einem Raster angeordnete Abstandhalter aufweist, auszubilden. Dabei können in einem leicht durchführbaren Druckverfahren die Abstandhalter unmittelbar auf der Trägerschicht mit Hilfe entsprechend geformter Druckwalzen ausgebildet werden. Die Druckwalzen sind derart geformt, dass Beschichtungsstärken von 1 bis 30 µm und an nach dem Raster angeordneten Stellen Beschichtungsstärken von 4 bis 100 µm, vorzugsweise 4 bis 15 µm, welche durch der Form des Rasters entsprechende Vertiefungen in der Druckwalzenoberfläche gebildet werden, entstehen.

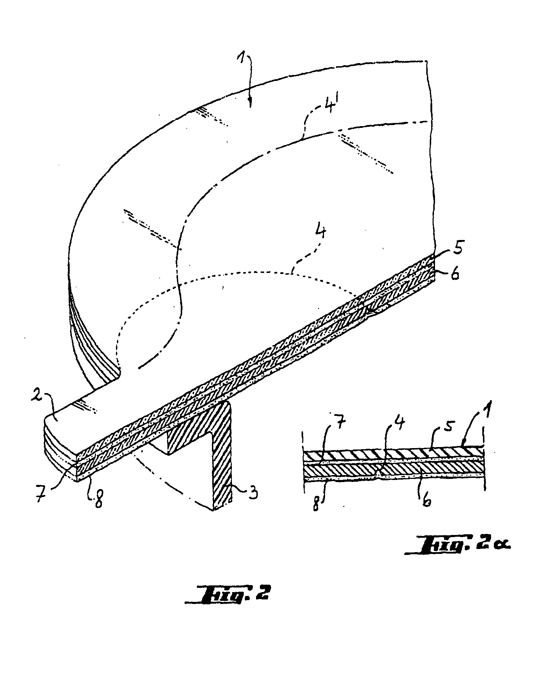

Auf die derart vorbehandelte Trägerschicht 6 wird, wie in Fig. 2 dargestellt, auf der dem Packungsgut abgewandten Seite die drucksensitive Kleberschicht 7 aufgetragen. Als drucksensitive Kleber werden ausschließlich lebensmittelverträgliche Formulierungen, wie weichmacherfreie Polymerdispersionen auf Acrylsäureester-Copolymerbasis in Wasser eingesetzt. Anschließend erfolgt, beispielsweise in konventionellen Kaschierstationen, die Verbindung mit der Außenschicht 5. Die Außenschicht 5 besteht beispielsweise aus einer transparenten hitzebeständigen Kunststoff-Folie.

Weiters ist es auch möglich, den drucksensitiven Kleber 7 an der Außenschicht 5 anzubringen, wobei dieser an der dem Packungsgut zugewandten Seite der Außenschicht aufgetragen wird.

Anschließend wir die dem Packungsgut zugewandte Seite der Trägerschicht 7 mit der heißsiegelbaren Schicht 8 versehen. Diese kann beispielsweise aus einem Heißsiegellack bestehen, welcher in üblichen Lackierstationen aufgetragen wird. Weiters ist es möglich, die heißsiegelbare Schicht 8 in Form einer Extrusionsbeschichtung auszubilden.

An dieser Mehrschichtfolie werden nunmehr durch Prägen oder Stanzen die Schwächungslinien 4, 4' für die Ausbildung der Öffnung zur Entnahme von Behälterinhalt erzeugt. Gemäß Fig. 2 hat der Verlauf der Schwächungslinien 4, 4' die Form eines Kreisbogens, wobei der Verlauf der Schwächungslinien 4' zum größten Teil durchgehend und jener der Schwächungslinie 4 zum größten Teil unterbrochen ist.

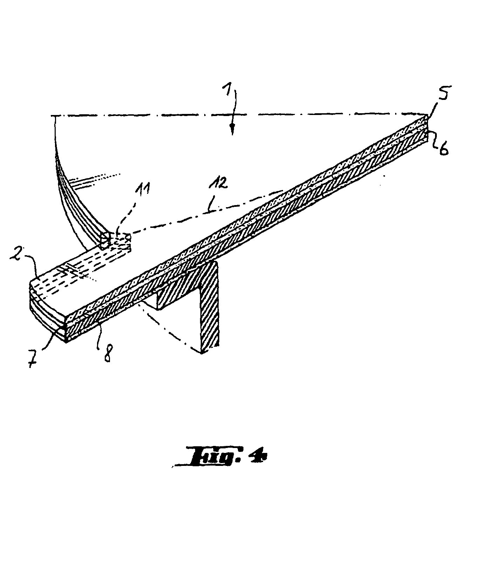

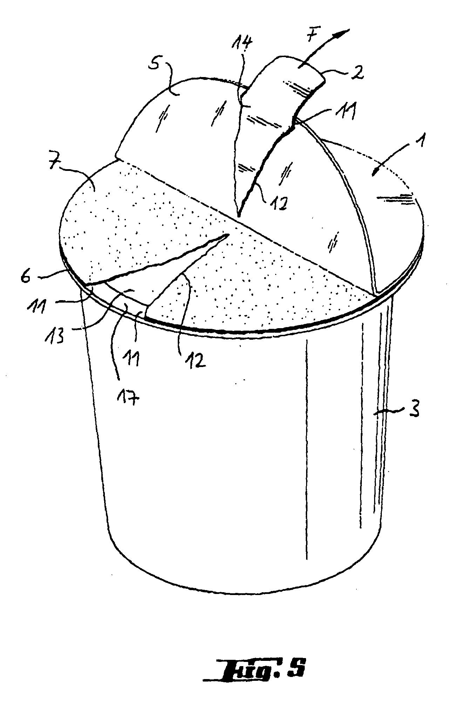

In einer weiteren erfinderischen Variante werden, wie in Fig. 4 dargestellt, die Schwächungslinien in Form von Anstanzungen 11 in der Trägerschicht 6 mittels entsprechender Stanzwerkzeuge ausgebildet. Diese bilden, wie in Fig. 5 gezeigt, den Ausgangspunkt für die Weiterreißlinien 12 zur Ausbildung der etwa V-förmigen Öffnung 13 zur Entnahme von Behälterinhalt. Gleichzeitig werden durch Ausstanzen aus der heißsiegelbaren Mehrschichtfolie Deckelelemente, vorzugsweise mit Öffnungshilfen, wie Grifflaschen, gebildet.

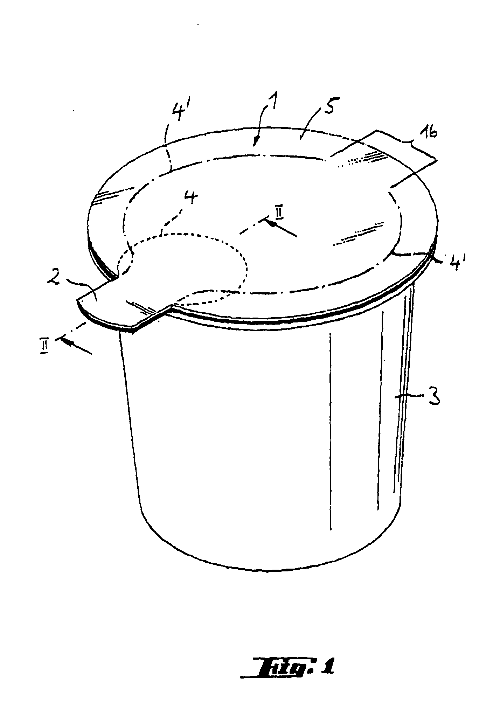

Deren Verwendung zum Verschließen von Behältern wird an Hand der Figuren 1, 3, 5 und 6 näher erläutert.

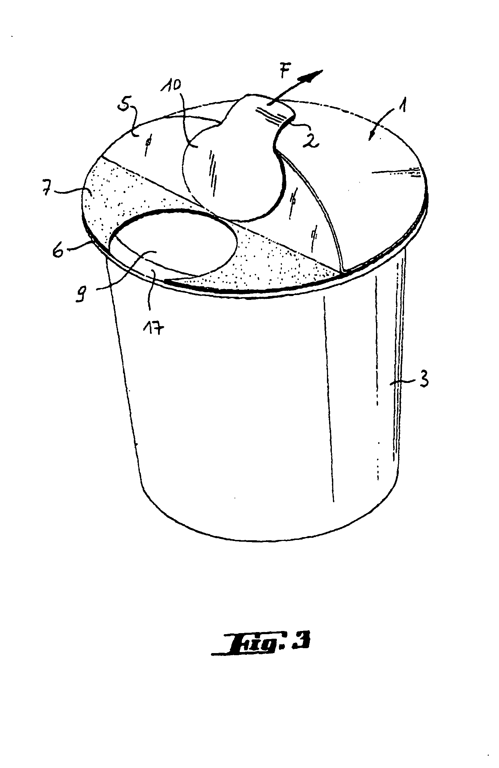

In Figur 3 ist für die Entnahme von Behälterinhalt eine kreisförmige Öffnung 9 vorgesehen. Diese wird dadurch definiert, dass die etwa kreisförmigen Schwächungslinien 4 in der Trägerschicht 6 der Mehrschichtfolie vorgesehen sind. Fasst nunmehr der Verbraucher die Grifflasche 2 der heißsiegelbaren Mehrschichtfolie an und zieht diese in Richtung des Pfeiles F, so wird im Becherrand-Bereich 17 die Klebekraft überwunden. In der Folge wird durch weitere Kraftanwendung die Klebekraft der Selbstklebeschicht 7 überwunden und die Außenschicht 5 von der Trägerschicht 6 abgezogen. Dabei reißt die Trägerschicht 6 entlang der Schwächungslinien 4 ein, so dass der Tragerschichtrest 10 auf der Außenschicht 5 haften bleibt. Dadurch wird die kreisförmige Öffnung für die Entnahme von Behälterinhalt gebildet. Diese Öffnung 9 kann durch Anwenden einer Andrückkraft in entgegengesetzter Richtung zur Kraft F wieder verschlossen werden, indem der Verbraucher die Außenschicht 5 an die Selbstklebeschicht 7 heranführt und an diese drückt.

Sind die Schwächungslinien 4', wie in Figur 1 dargestellt, im Bereich 16 vis-à-vis der Grifflasche 2 unterbrochen, so kann der Verbraucher auch nach gänzlichem Ablösen der Mehrschichtfolie 1 den Behälter 3 wiederverschließen.

In Figur 5 wird ebenso die Verwendung einer heißsiegelbaren Mehrschichtfolie 1 zum Verschließen von Packungen, wie Joghurtbechern 3, dargestellt, wobei dieser in teilweise geöffnetem Zustand vorliegt. Die Darstellung gemäß Figur 5 unterscheidet sich von jener gemäß Figur 3 dadurch, dass die Öffnung zur Entnahme von Behälterinhalt etwa V-förmig ist. Diese V-förmige Öffnung 13 wird dadurch gebildet, dass der Verbraucher durch Zug an der Grifflasche 2 die Außenschicht 5 zusammen mit dem Trägerschichtrest 14 von der Selbstklebeschicht 7 abzieht. Zuvor muss auch in diesem Fall die im Becherrand-Bereich 17 wirkende Klebekraft überwunden werden. Bei weiterer Kraftanwendung reißt die Trägerschicht 6 ausgehend von den Anstanzungen 11 entlang der Linien 12 ein, so dass ein etwa V-förmiger Trägerschicht-Rest 14 an der Außenschicht 5 haften bleibt. Wird nunmehr durch Andrücken in entgegengesetzter Richtung zu Pfeil F die Außenschicht 5 wiederum an die Selbstklebeschicht 7 herangeführt und an diese angedrückt, so kann die V-förmige Entnahmeöffnung 13 wiederverschlossen werden.

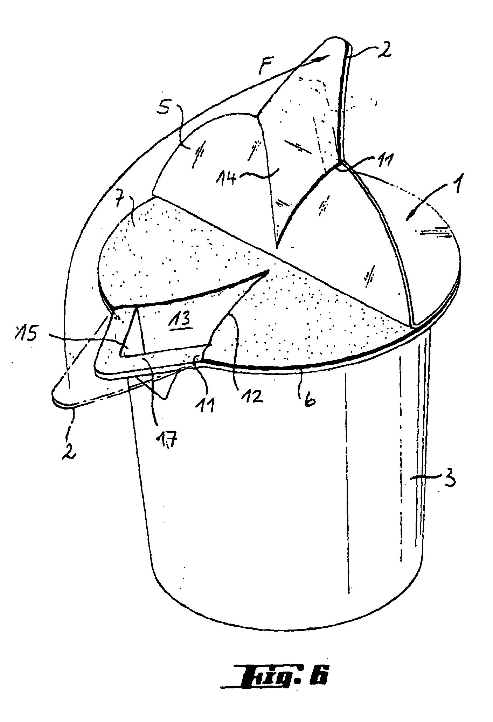

Bei der Ausführungsform von Figur 6 wird dieser Öffnungsvorgang analog zu Figur 5 ausgeführt, mit dem Unterschied, dass der Becher 3 von Figur 6 eine schnabelförmige Ausgießvorrichtung 15 aufweist.

Dabei ist die Grifflasche 2 der Form der Ansgießvorrichtung 15 angepasst und überragt diese, um ein leichtes Anfassen zu ezmöglichen. Weiters liegt auch hier im Becherrandbereich 17 eine entsprechende Siegelnaht vor, welche den luftdichten Verschluss der Packung gewährleistet. Zum Überwinden der Klebekraft der Siegelnaht wird die Grifflasche 2 in Richtung des Pfeiles F gezogen. Das weitere Öffnen erfolgt wie an Hand von Figur 5 beschrieben. Nach teilweisem Ausgießen des üblicherweise dünnflüssigen Behälterinhaltes, wie Kaffeeobers, kann der V-förmige Trägerschicht-Rest 14 an der V-förmigen Ausgießvorrichtung 15 mittels der Selbstklebeschicht 7 durch Andrücken festgeklebt werden, so dass die Packung wiederverschlossen ist und für die weitere Verwendung aufbewahrt werden kann.

### Gewerbliche Anwendbarkeit

Durch die Verwendung der erfindungsgemäßen, heißsiegelbaren Mehrschichtfolie in Form von Deckelelementen ist es möglich, Behälter für Lebensmittel, wie beispielsweise Joghurt, luftdicht zu verschließen. Dabei ist es möglich, diesen Behälter ganz oder teilweise zu öffnen, und auch nach dem Öffnen, bedingt durch die Ausbildung der erfindungsgemäßen Mehrschichtfolie, wiederzuverschließen. Diese Wiederverschließbarkeit ist dadurch gegeben, dass zwischen der Trägerschicht 6 und der Außenschicht 5 eine Selbstklebesehicht 7 vorliegt, von welcher zwar die Außenschicht 5 beim Öffnen unter Ausbildung einer entsprechenden Öffnung zur Entnahme das Behälterinhaltes abgezogen, jedoch nach dem gänzlichen oder teilweisen Öffnen sowie nach der Entnahme wieder an die Trägerschicht 6 herangebracht und an diese angedrückt wird. Dadurch ist der Behälter so gut verschlossen, dass zumindest bis zur gänzlichen Entnahme des Behälterinhaltes dieser vor Verschmutzungen geschützt wird.

Zusammenfassend kann ein Ausführungsbeispiel der Erfindung beispielhaft wie folgt beschrieben werden:

Eine heißsiegelbare Mehrschichtfolie 1, für nach dem Öffnen wieder verschließbare Packungen 3 besteht aus einer Außenschicht 5 und einer Trägerschicht 6, welche an der dem Packungsgut zugewandten Seite eine heißsiegelbare Schicht 8 aufweist. Zwischen Trägerschicht und Außenschicht ist eine Selbstklebeschicht 7 aus drucksensitivem Klebstoff vorgesehen. Die Trägerschicht 6 weist Schwachungslinien 4, 4', 11 auf, welche eine Öffnung 9, 13 zur Entnahme von Packungsgut definieren. Bei Verwendung der erfindungsgemäßen heißsiegelbaren Mehrschichtfolie 1 zum Verschließen eines Behälters 3 ist es für den Verbraucher in einfacher Weise möglich, einerseits eine entsprechend definierte Öffnung 9, 13 zur Entnahme des Behälterinhaltes durch Anwenden einer Schälkraft auszubilden und anderseits durch Andrücken der abgezogenen Außenschicht 5 an die Selbstklebeschicht 7 den Behälter 3 wieder zu verschließen. Dieser Vorgang kann mehrmals wiederholt werden, bis der gesamte Behälterinhalt konsumiert ist, wobei dieser vor etwaigen Verschmutzungen geschützt ist.

## Patentansprüche

1. Heißsiegelbare Mehrschichtfolie (1) für nach dem Öffnen wiederverschließbare Packungen (3), bestehend aus einer Außenschicht (5) und einer Trägerschicht (6), welche an ihrer dem Packungsgut zugewandten Seite eine heißsiegelbare Schicht (8) aufweist, **dadurch gekennzeichnet, dass** zwischen Trägerschicht (6) und Außenschicht (5) eine Selbstklebeschicht (7) aus drucksensitivem Klebstoff vorliegt, dass die Trägerschicht Schwächungslinien (4, 4', 11), welche eine Öffnung (9, 13) zur Entnahme von Packungsgut definieren, sowie an ihrer dem Behälterinnenraum zugewandten Seite eine oberflächenrauhe Beschichtung mit einer Rauhtiefe von 1 bis 100 µm aufweist.

2. Heißsiegelbare Mehrschichtfolie nach Anspruch 1, **dadurch gekennzeichnet, dass** die Öffnung (9) durch Einkerbungen (4, 4') definiert ist.

3. Heißsiegelbare Mehrschichtfolie nach Anspruch 2, **dadurch gekennzeichnet, dass** der Verlauf der Einkerbungen durchgehend oder unterbrochen ist.

4. Heißsiegelbare Mehrschichtfolie nach Anspruch 2 oder 3, **dadurch gekennzeichnet, dass** die Öffnung (9) die Form eines Kreises, eines Kreisbogens oder einer Ellipse aufweist.

5. Heißsiegelbare Mehrschichtfolie nach einem der Ansprüche 1 bis 4, **dadurch gekennzeichnet, dass** die Mehrschichtfolie eine Öffnungshilfe, vorzugsweise eine Grifflasche (2), aufweist.

6. Heißsiegelbare Mehrschichtfolie nach Anspruch 5, **dadurch gekennzeichnet, dass** beidseitig an der Öffnungshilfe Anstanzungen (11) in der Trägerschicht (6) vorgesehen sind, welche durch Weiterreißen des Trägerschichtmaterials eine etwa V-förmige Öffnung (13) definieren.

7. Heißsiegelbare Mehrschichtfolie nach einem der Ansprüche 1 bis 6, **dadurch gekennzeichnet, dass** die Außenschicht (5) eine transparente, hitzebeständige Kunststoff-Folie ist.

8. Heißsiegelbare Mehrschichtfolie nach einem der Ansprüche 1 bis 6, **dadurch gekennzeichnet, dass** die Außenschicht (5) ein bedruckter Verbund aus einer Aluminiumfolie und/oder Papier und/oder einer Kunststoff-Folie, vorzugsweise einer metallisierten Kunststoff-Folie ist.

9. Heißsiegelbare Mehrschichtfolie nach einem der Ansprüche 1 bis 8, **dadurch gekennzeichnet, dass** die Trägerschicht (6) eine Kunststoff-Folie oder ein Kunststoff-Folien-Verbund ist.

10. Heißsiegelbare Mehrschichtfolie nach Anspruch 9, **dadurch gekennzeichnet, dass** die Kunststoffe der Kunststoff-Folie oder des Kunststoff-Folien-Verbundes aus der Gruppe Polypropylen, Polyethylen, Polyamid und Polyethylenterephthalat ausgewählt sind.

11. Heißsiegelbare Mehrschichtfolie nach einem der Ansprüche 1 bis 8, **dadurch gekennzeichnet, dass** die Trägerschicht (6) eine Aluminiumfolie ist.

12. Heißsiegelbare Mehrschichtfolie nach einem der Ansprüche 1 bis 11, **dadurch gekennzeichnet, dass** die oberflächenrauhe Beschichtung der Trägerschicht (6) in Form eines oberflächenrauhen Aufdruckes vorliegt.

13. Heißsiegelbare Mehrschichtfolie nach Anspruch 12, **dadurch gekennzeichnet, dass** der oberflächenrauhe Aufdruck nach einem Raster angeordnete Abstandhalter aufweist.

14. Heißsiegelbare Mehrschichtfolie nach Anspruch 13, **dadurch gekennzeichnet, dass** die Abstandhalter eine Höhe von 1 bis 100 µm, vorzugsweise von 4 bis 15 µm, aufweisen.

15. Heißsiegelbare Mehrschichtfolie nach einem der Ansprüche 12 bis 14, **dadurch gekennzeichnet, dass** die Rauhtiefe der oberflächenrauhen Beschichtung durch Zusatz eines körnigen Materials erzeugt wird.

16. Verwendung einer heißsiegelbaren Mehrschichtfolie nach einem der Ansprüche 1 bis 15 zum Verschließen von Lebensmittelbehältern, wie Joghurtbechern (3), welche mittels einer Öffnungshilfe, vorzugsweise einer Grifflasche (2), derart geöffnet werden, dass beim Öffnen innerhalb der Trägerschicht (6) durch Maßgabe der Schwächungslinien (4, 4', 11) die Öffnung (9, 13) zur Entnahme vom Behälterinhalt ausgebildet wird, welche Öffnung (9, 13) durch die drucksensitive Klebstoffschicht (7) wieder verschlossen werden kann.

17. Verwendung nach. Anspruch 16, **dadurch gekennzeichnet, dass** als Lebensmittelbehälter (3) einer mit einer vorzugsweise schnabelförmigen Ausgießvorrichtung (15) eingesetzt wird.

## Claims

1. Heat-sealable multilayer film (1) for packages (3) which may be resealed after opening, comprising an outer layer (5) and a support layer (6) which has a heat-sealable layer (8) on its side facing the packaged material, **characterised in that** a self-adhesive layer (7) formed from pressure-sensitive adhesive is provided between the support layer (6) and the outer layer (5), **in that** the support layer has weakening lines (4, 4', 11), which define an opening (9, 13) for the removal of packaged material, as well as a rough-surfaced coating with a peak-to-valley height of 1 to 100 µm on its side facing the interior of the container.

2. Heat-sealable multilayer film according to claim 1, **characterised in that** the opening (9) is defined by indentations (4, 4').

3. Heat-sealable multilayer film according to claim 2, **characterised in that** the course of the indentations is continuous or interrupted.

4. Heat-sealable multilayer film according to claim 2 or 3, **characterised in that** the opening (9) has the shape of a circle, a circular arc or an ellipse.

5. Heat-sealable multilayer film according to one of claims 1 to 4, **characterised in that** the multilayer film has an opening aid, preferably a gripping tab (2).

6. Heat-sealable multilayer film according to claim 5, **characterised in that** stamped portions (11) are provided in the support layer (6) on both sides of the opening aid, which portions define a roughly V-shaped opening (13) by further tearing of the support layer material.

7. Heat-sealable multilayer film according to one of claims 1 to 6, **characterised in that** the outer layer (5) is a transparent, heat-resistant plastic film.

8. Heat-sealable multilayer film according to one of claims 1 to 6, **characterised in that** the outer layer (5) is a printed composite of an aluminium foil and/or paper and/or a plastic film, preferably a metallised plastic film.

9. Heat-sealable multilayer film according to one of claims 1 to 8, **characterised in that** the support layer (6) is a plastic film or a plastic film composite.

10. Heat-sealable multilayer film according to claim 9, **characterised in that** the plastics materials of the plastic film or of the plastic film composite are selected from the group polypropylene, polyethylene, polyamide and polyethylene terephthalate.

11. Heat-sealable multilayer film according to one of claims 1 to 8, **characterised in that** the support layer (6) is an aluminium foil.

12. Heat-sealable multilayer film according to one of claims 1 to 11, **characterised in that** the rough-surfaced coating of the support layer (6) is in the form of a rough-surfaced imprint.

13. Heat-sealable multilayer film according to claim 12, **characterised in that** the rough-surfaced imprint has spacers arranged according to a grid.

14. Heat-sealable multilayer film according to claim 13, **characterised in that** the spacers have a height of 1 to 100 µm, preferably of 4 to 15 µm.

15. Heat-sealable multilayer film according to one of claims 12 to 14, **characterised in that** the peak-to-valley height of the rough-surfaced coating is produced by the addition of a granular material.

16. Use of a heat-sealable multilayer film according to one of claims 1 to 15 for sealing food containers, such as yoghurt pots (3), which are opened by means of an opening aid, preferably a gripping tab (2), in such a way that during opening, the opening (9, 13) for removing the container's contents is formed inside the support layer (6) according to the weakening lines (4, 4', 11), which opening (9, 13) can be sealed again by the pressure-sensitive adhesive layer (7).

17. Use according to claim 16, **characterised in that** as the food container (3) is used one with a preferably beak-shaped pouring device (15).

## Revendications

1. Film multicouches (1) thermoscellable pour emballages (3) refermables après l'ouverture , comprenant une couche extérieure (5) et une couche support (6) qui, sur sa face tournée vers le produit emballé, est pourvue d'une couche (8) thermoscellable, **caractérisé en ce qu'**entre la couche support (6) et la couche extérieure (5) est disposée une couche autoadhésive (7) sensible à la pression, **en ce que** la couche support présente des lignes de déchirure (4, 4', 11), qui définissent une ouverture (9, 13) pour le prélèvement du produit emballé, ainsi que sur sa face tournée vers l'intérieur du récipient un revêtement de surface rugueux, avec une rugosité de 1 à 100 µm

2. Film multicouches thermoscellable selon la revendication 1, **caractérisé en ce que** l'ouverture (9) est définie par des entailles (4, 4').

3. Film multicouches thermoscellable selon la revendication 2, **caractérisé en ce que** le tracé des entailles est continu ou discontinu.

4. Film multicouches thermoscellable selon la revendication 2 ou 3, **caractérisé en ce que** l'ouverture (9) a la forme d'un cercle, d'un arc de cercle ou d'une ellipse.

5. Film multicouches thermoscellable selon une des revendications 1 à 4, **caractérisé en ce que** le film multicouches présente un moyen d'aide à l'ouverture, de préférence une languette (2).

6. Film multicouches thermoscellable selon la revendication 5, **caractérisé en ce qu'**il est prévu dans la couche support (6), de part et d'autre du moyen d'aide à l'ouverture, des amorces de découpe (11) qui, par déchirure du matériau de la couche support, définissent une ouverture (13) sensiblement en forme de V.

7. Film multicouches thermoscellable selon une des revendications 1 à 6, **caractérisé en ce que** la couche extérieure (5) est un film de matière plastique transparente, résistant à la chaleur.

8. Film multicouches thermoscellable selon une des revendications 1 à 6, **caractérisé en ce que** la couche extérieure (5) est un système composite imprimé, formé d'une feuille d'aluminium et/ou de papier et/ou d'un film de matière plastique, de préférence un film de matière plastique métallisé.

9. Film multicouches thermoscellable selon une des revendications 1 à 8, **caractérisé en ce que** la couche support (6) est un film de matière plastique ou un système composite de films de matière plastique.

10. Film multicouches thermoscellable selon la revendication 9, **caractérisé en ce que** les matières plastiques du film de matière plastique ou du système composite de films de matière plastique sont sélectionnées parmi le groupement polypropylène, polyéthylène, polyamide ou pol yéthyl ène-théraphtal ate.

11. Film multicouches thermoscellable selon une des revendications 1 à 8, **caractérisé en ce que** la couche support (6) est un film d'aluminium.

12. Film multicouches thermoscellable selon une des revendications 1 à 11, **caractérisé en ce que** le revêtement rugueux de la couche support (6) se présente sous la forme d'une empreinte à surface rugueuse.

13. Film multicouches thermoscellable selon la revendication 12, **caractérisé en ce que** l'empreinte à surface rugueuse comporte des filets disposés en un réseau.

14. Film multicouches thermoscellable selon la revendication 13, **caractérisé en ce que** les filets ont une hauteur de 1 à 100 µm, de préférence de 4 à 15 µm.

15. Film multicouches thermoscellable selon une des revendications 12 à 14, **caractérisé en ce que** la profondeur de rugosité du revêtement rugueux est obtenue par ajout d'un matériau granuleux.

16. Utilisation d'un film multicouches thermoscellable selon une des revendications 1 à 15 pour fermer des récipients à produits alimentaires, tels que des pots à yaourt (3) qui peuvent être ouverts grâce à un moyen d'aide à l'ouverture, de préférence une languette (2), d'une manière telle que lors de l'ouverture, l'ouverture (9, 13) pour le prélèvement du contenu du récipient soit formée dans la couche support (6), en fonction des lignes de déchirure (4, 4', 11), ouverture (9, 13) qui peut être refermée grâce à la couche d'adhésif (7) sensible à la pression.

17. Utilisation selon la revendication 16, **caractérisée en ce qu'**on utilise comme récipient à produit alimentaire (3), un récipient pourvu d'un dispositif verseur (15), de préférence en forme de bec.
